# EUROPEAN PATENT APPLICATION

(11) **EP 4 459 724 A1**
(43) Date of publication of application: **06.11.2024**
(21) Application number: 22916882.8
(22) Date of filing: 28.12.2022
(51) Int. Cl.: H01M 8/243, H01M 4/86

(54) **METHOD FOR MANUFACTURING TUBULAR SOLID OXIDE FUEL CELLS AND BATTERY**

(30) Priority: 29.12.2021 RU 2021139763
(71) Applicant: "TOPAZ" LIMITED LIABILITY COMPANY ("TOPAZ" LLC), Moscow, 121205 (RU)
(72) Inventor: LEVCHENKO, Egor Aleksandrovich, g. Chernogolovka, 142432 (RU); TIMERBULATOV, Ruslan Sergeevich, Moscow, 109316 (RU); GVOZDKOV, Ilya Alekseevich, Moskovskaya obl., 141031 (RU); SIVAK, Aleksandr Vladimirovich, g. Vidnoe, 142700 (RU)
(74) Representative: Osmans, Voldemars
(86) International application number: PCT/RU2022/000403
(87) International publication number: WO 2023/128812

(57) **Abstract**

The inventions relate to the field of electrical engineering, and more particularly to a method for manufacturing a high-temperature solid oxide fuel cell (SOFC) having a tubular shape and to a battery of tubular SOFCs. The battery includes at least two tubular SOFCs and a support plate with through openings for tubular SOFCs. The method includes applying solder to the areas in which individual SOFCs are arranged in the openings in a support plate, and then carrying out soldering, wherein the solder is made of an electrically conductive material having a melting point above the working temperature of an SOFC and having a coefficient of thermal expansion close to that of the materials of the support plate and of the electrodes of the SOFCs. The result is that of improving the quality of the seal between each individual tubular SOFC and the support plate during the soldering process, which in turn preserves the power characteristics of the battery during thermal cycling.

## Description

The invention relates to the field of electrical engineering, namely, to high-temperature solid oxide fuel cells (SOFC) of tubular geometry with a carrier anode electrode and can be used to make fuel cell batteries.

Currently, there are two vital tasks in manufacturing electrochemical generators with solid oxide fuel cells (SOFC): sealing SOFCs when they are assembled into a battery to ensure reliable separation of gas spaces of the supplied and discharged gases (fuel gas and oxidizer gas); and ensuring effective electrical switching of SOFCs while minimizing ohmic resistance in the battery.

To solve the first task, e.g., sealing SOFCs of tubular or planar geometry in a battery, specialized glass-ceramic sealants based on oxides of silicon, boron, aluminum and other metals are usually used (as, for example, glass-ceramic high-temperature adhesive in patent RU 2138885).

The main disadvantage of this sealing method is the low resistance of glasses in the sealant composition to sudden temperature changes (in particular, when the SOFC reaches an operating temperature of 650-850°C) and a narrow operating temperature range. Such restrictions are acceptable in power plants for stationary applications, which are brought to operating temperatures gradually, in a few hours, and are not operated in frequent start-stop conditions. For microtubular SOFCs (SOFCs of tubular geometry, usually with a diameter below 10 mm), a high permissible heating rate (more than 200°C per minute) without destruction is one of the main advantages of using them in mobile power units and backup power supply systems, therefore using glasses in microtubular SOFC batteries is undesirable, in order to keep its operational properties at significant temperature changes (in particular, due to glass cracking or changes in its morphological properties).

The second task - ensuring effective electrical switching of tubular and microtubular SOFCs in a battery - is often solved by using coils of SOFC surfaces (namely, anode and/or cathode electrodes) with a wire made of silver or platinum or alloys based on precious metals with further interconnection of such wires, which is the solution to the problem of electrical switching of individual tubular SOFCs.

However, when operating power units with SOFCs, there are slowly growing (for example, due to surface oxidation) or rapidly arising ohmic losses (for example, due to detachment) due to a breach of such an electrical contact, as a result of different coefficients of thermal expansion in the materials of the SOFC electrode (ceramic, metal or cermet) and wire conductive elements, as well as due to the small area of electrical contact between the wire and the electrode.

There are technical solutions, for example, patent RU 2138885, which proposes using various types of bushings and washers for connecting and switching fuel cells into an assembly.

The disadvantages of such technical solutions are the complex design and high material consumption, as well as the high complexity of the assembly process and low reliability of the structure because additional sealing of the fit boundaries of such bushings and washers is required.

The effect claimed by the technical solution is to improve the quality and reliability of manufactured tubular (in particular, microtubular) SOFC batteries while reducing the cost of the process by simplifying it, improving manufacturability and reducing the duration of the SOFC battery assembly process by combining electrical switching and sealing into a single operation using high-temperature metal solders and soldering operations.

The effect is achieved by making a battery of tubular SOFCs in such a manner that single tubular SOFCs are placed in the through holes of the base plate, solder is applied to the zones where tubular SOFCs are located in the holes of the base plate, followed by soldering, for example, by induction method. A high-temperature solder is used, made of an electrically conductive material having a melting point above the SOFC operating temperature and a coefficient of thermal expansion (CTE) close to the that of the base plate and SOFC electrodes.

The base plates are made of a material resistant to high temperatures and having low ohmic resistance, for example, metal, or of a non-conductive material with conductive elements in the area of holes, for example, metal tracks or metallized zones.

When soldering, a solder made of a conductive material is used, for example, an alloy of metals, in particular, based on Ni, Co, Si, but other metals can also be used.

A part of the tubular SOFC, in particular, the surface of the electrode in the soldering area of each single SOFC placed in the hole of the base plate, if necessary, can be pre-coated with a layer of electrically conductive material resistant to the SOFC operating temperature (having chemical stability at the SOFC operating temperature) to improve the reliability of the solder j oint. The soldering area is usually the end part of the SOFC. A layer of heat-resistant electrically conductive material is a layer, for example, made of nickel, platinum or titanium hydride. The coating is usually applied by chemical deposition or other coating methods, in particular using suspensions. The pre-coated surface is the surface of the anode electrode and the surface of the electrolyte near the anode electrode, or the surface of the cathode electrode, or the surface of the cathode electrode and the surface of the electrolyte near the cathode electrode.

Using a solder made of an electrically conductive material having a melting point above the SOFC operating temperature and the CTE close to that of the materials of the SOFC base plate and electrodes provides simultaneous high-quality sealing and electrical switching of the battery, which, in turn, significantly reduces the battery assembly time, as well as simplifies the assembly process and reduces material costs.

Moreover, prior to the soldering operation, preliminary surface preparation of the tubular SOFC in the soldering zone can be done.

Previously, the key difficulty of soldering was to organize reliable mechanical and electrical contact of the metal solder with the bearing base material made of the initial cermet material consisting, in particular, of a NiO composite and a ceramic electrolyte material (for example, YSZ or SSZ), as well as with the ceramic material of the cathode electrode (for example, LSC or LSCF).

Currently, there are methods of soldering ceramic products and cermets similar in composition to SOFC cermets, active silver-based solders that maintain (wet) the surface of ceramic products, however, in addition to the significant cost (due to precious metals in their composition), they are not suitable for tubular SOFC batteries operating at high temperatures, since due to the large difference in coefficients of thermal expansion (CTE) during thermal cycling processes, the SOFC material is destroyed in the soldering area, which sharply decreases the power characteristics of the SOFC battery and leads to a complete loss of its operability due to the direct mixing of fuel gases (on the side of the SOFC anode electrode) with the oxidizer (oxygen from the air, on the side of the SOFC cathode electrode).

The second negative factor in using silver-based solders is the side migration of silver along the grain boundaries of ceramic crystallites in the electrolyte layer at high temperatures. Thus, when applying solder to a layer of a cathode electrode, anode electrode or electrolyte, after some time of SOFC operation, the operating voltage falls down due to a short circuit of the anode and cathode electrodes in the solder application area, which in turn leads to decreased power characteristics of the SOFC.

In accordance with the stated technical solution, metal alloys are used as the solder material, in particular those based on Ni, Co, Si. To increase the reliability of mechanical and electrical contact in the area of subsequent solder application and to improve the wettability of the ceramic surface with solder during soldering, preliminary tinning of the surface of the anode electrode or anode electrode and electrolyte or cathode electrode with a material resistant to soldering temperatures (mainly Ni or platinum, or titanium hydride) can done, which can be applied to the surface of a tubular SOFC in the soldering area by chemical deposition or physical application, for example, using suspensions. The melting point of the solder used should not exceed the limit temperature for maintaining the stability of the SOFC and the materials in its composition during the soldering operation, which is done, in particular, by heating the soldered objects in the furnace. For the SOFC embodiment used as an example of the claimed technical solution, consisting of an anode base Ni-YSZ, a functional anode layer Ni-YSZ, an electrolyte YSZ, a buffer layer GDC, a cathode layer LSCF, the melting point of the solder is below 1200°C. When using soldering methods that allow local heating of the SOFC/base plate connection area (in particular, induction soldering), it is possible to use solder materials that exceed the thermochemical stability temperatures of the materials of individual SOFC layers, but do not exceed the melting point of the base plate material.

To ensure the reliability of the SOFC/base plate connection in terms of tightness, as well as electrical contact, the solder material and the base plate material are selected based on coherence of the coefficients of thermal expansion of these materials. As a rule, the difference in the coefficients of thermal expansion of adjacent SOFC layers is below 10*10-6 K⁻¹, preferably below 5*10-6 K⁻¹ in the temperature range of 20-800°C. The solder material, in particular, can be chosen based on nickel (for example, BNi-2 grade), and the material of the base plate can be heat-resistant steel, in particular, AISI 444.

Using soldering, in particular, based on nickel (for example, BNi-2 grade), which does not contain precious metals in the composition, having a melting point above the SOFC operating temperature, allows sealing of the tubular SOFC in a module or battery and electrical switching simultaneously (within a single operation).

The claimed technical solution is economically more profitable because of using cheaper materials and does not require specialized equipment, and can be scaled during production without significantly changing it, for example, with sequential conveyor assembly of SOFC batteries or with a simultaneously manufactured array of SOFC modules or batteries per soldering cycle.

The claimed invention is explained by illustrations.

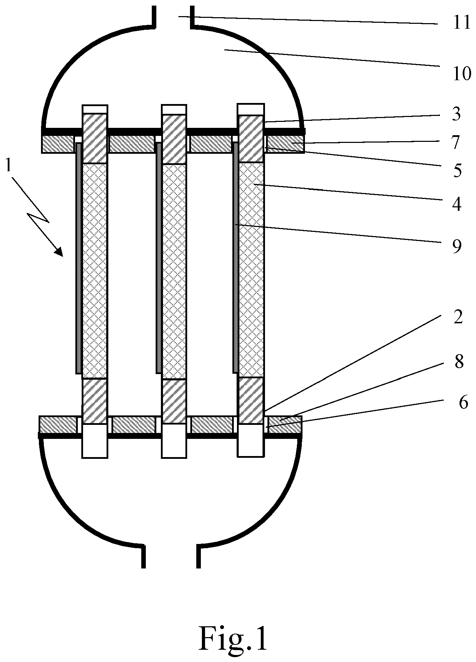

Fig. 1 shows a general view of the SOFC battery (module) with two base plates and gas collectors (without solder for clarity);

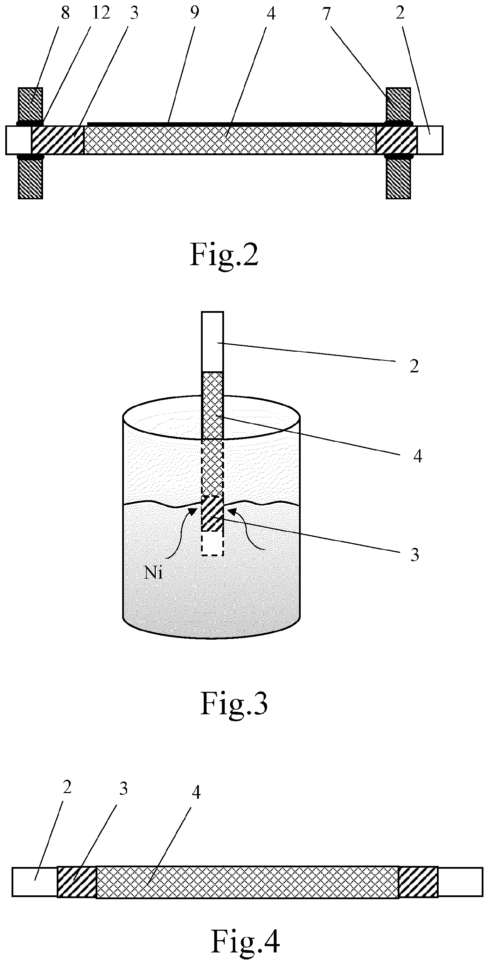

Fig. 2 shows the location of the tubular SOFC in the base plates (with solder);
Fig. 3 shows a schematic representation of applying a pre-coating to the end parts of a tubular SOFC (a method of applying using suspensions by dipping an object into a suspension);
Fig. 4 shows a single tubular SOFC.

Next, let us consider the battery 1 of tubular SOFCs with two base plates.

Single SOFCs are made in the form of a tubular base of the anode electrode 2 with a functional anode layer (optional layer), an electrolyte layer 3 and a cathode electrode layer 4 applied to it. The end parts of the SOFC are placed in through holes 5 and 6 of the corresponding base plates 7 and 8. In this case, the cathode current collector is provided by the bus 9. To supply and distribute fuel gas, a collector 10 with a fuel supply pipe 11 is used. It is possible to use one gas collector even if only one base plate is installed.

To ensure reliable sealing (mainly in the fuel gas supply zone), a rigid connection of the tubular SOFC with the base plate by means of solder 12 is used. To do this, after pre-coating the tubular SOFC, solder is applied to the soldering zone, and the tubular SOFC is soldered into the holes of the steel base plates, for example, by induction method. In this case, the surface of the anode electrode (anode base with or without a functional anode layer) and the surface of the anode electrode with a layer of solid electrolyte applied to it are in simultaneous contact with solder in the area of the hole of the base plate, and the surface of the cathode electrode is connected to solder without the need to ensure solder contact with a layer of solid electrolyte in the area of the hole. As a result of heating, the solder material flows into the cavities of the holes, sealing them. At the same time, in the cathode electrode area, the solder is in close contact with the current-collecting bus 9 and/or the SOFC current collector (not shown), thereby ensuring reliable electrical switching with minimal ohmic resistance.

Due to the pre-coating, the fluidity of the solder on the soldered surface increases, and the soldering site is sealed. When the thickness of the pre-coating layer (for example, titanium hydride) is less than 10 microns, acceptable electrical contact resistances between the solder materials and the SOFC electrode are achieved.

Thus, as a result of using high-temperature solder and the method of soldering tubular SOFCs, both the problem of electrical switching and the problem of sealing are solved simultaneously (in one operation), since the solder is able to penetrate into the holes of the base plate to seal the space between the base plate and the SOFC surface throughout their contact zone. Moreover, the solder simultaneously provides electrical contact with the base plate (or the conductive elements on it) of either the anode electrode or the cathode electrode of the SOFC.

The following are particular embodiments of the method of manufacturing a SOFC battery:
Example 1. Two solid oxide fuel cells of tubular geometry with a layer structure:
   - a bearing base of the anode electrode, consisting of NiO/8YSZ in the proportion of 70/30% by weight, 400 microns thick, the porosity of the layer is 50%;
   - an anode functional layer consisting of NiO/8YSZ in the proportion of 50/50% by weight, 10 microns thick;
   - an electrolyte layer consisting of 8YSZ, 5 microns thick;
   - a cathode functional layer consisting of LSCF/GDC in the proportion of 40/60% by weight, accordingly, 10 microns thick;
   - a cathode current-collecting layer consisting of LSCF, 80 microns thick, the porosity of the layer is 50%;
   - a metallization layer consisting of nickel chemically deposited on the surface of the bearing base, an anode functional layer and an electrolyte in the soldering area, 10 microns thick;
   - a cathode current collector made of AISI 444 steel wire is fixed on the surface of the cathode current collector layer;
   located vertically in the holes of the base plate 5 mm thick, made of AISI 444 steel. The position of the fuel cells in the base plate is selected so that the metallized surface intersects with the plane of the base plate. Solder grade BNi-4 in the form of paste is applied to the surface of the base plate at its intersection with the fuel cells. The applied solder is dried at 200 °C for one hour. Then the assembly is placed in a high-temperature furnace, where soldering is performed in an argon medium at 1080°C for 10 minutes.
Example 2. Two solid oxide fuel cells of tubular geometry with a layer structure:
   - a bearing base of the anode electrode, consisting of NiO/8YSZ in the proportion of 60/40% by weight, 500 microns thick, the porosity of the layer is 40%;
   - an anode functional layer consisting of NiO/8YSZ in the proportion of 60/40% by weight, 10 microns thick;
   - an electrolyte layer consisting of SSZ, 5 microns thick;
   - a buffer layer GDC, 3 microns thick;
   - a cathode functional layer consisting of LSCF/GDC in the proportion of 40/60% by weight, accordingly, 10 microns thick;
   - a cathode current-collecting layer consisting of LSCF, 80 microns thick, the porosity of the layer is 50%;
   - a metallization layer consisting of platinum placed (by immersion in a prepared suspension) on the surface of the bearing base of the anode electrode, the anode functional layer and the electrolyte in the soldering area, 10 microns thick;
   - a cathode current collector made of platinum nickel wire is fixed on the surface of the cathode current collector layer; located vertically in the holes of a 5 mm thick base plate made of AISI 441 steel. The position of the fuel cells in the base plate is selected so that the metallized surface intersects with the plane of the base plate. Solder grade BNi-2 in the form of paste is applied to the surface of the base plate at its intersection with the fuel cells. The applied solder is dried at 200°C for one hour.
The assembly is then placed inside the induction heater coil, where the base plate and solder material are heated to the melting point of the solder.

Thus, using solder made of an electrically conductive material having a melting point above the SOFC operating temperature and a coefficient of thermal expansion close to the that of the materials of the base plate and SOFC electrodes allows simultaneous high-quality sealing and electrical switching of the battery (within one operation), which, in turn, significantly reduces time and simplifies the battery assembly process and also reduces material costs.

## Claims

1. A method for manufacturing a battery of tubular SOFCs, **characterized in that** single tubular SOFCs are placed in the through holes of the base plate, solder is applied to the zones where tubular SOFCs are placed in the holes of the base plate, followed by soldering, while the solder is made of an electrically conductive material having a melting point above the SOFC operating temperature and a coefficient of thermal expansion (CTE) close to that of the materials of the base plate and SOFC electrodes.

2. The method according to claim 1, **characterized in that** the surface of the SOFC electrode in the soldering area of each single SOFC placed in the hole of the base plate is pre-coated with a layer of electrically conductive material resistant to the operating temperature of the SOFC.

3. The method according to claim 2, **characterized in that** the pre-coated surface is the surface of the anode electrode and the surface of the electrolyte near the anode electrode.

4. The method according to claim 2, **characterized in that** the pre-coated surface is the surface of the cathode electrode or the surface of the cathode electrode and electrolyte near the surface of the cathode electrode.

5. The method according to claim 2, **characterized in that** the layer of electrically conductive material is a layer, for example, of nickel, platinum or titanium hydride.

6. A battery of tubular SOFC, including at least two tubular SOFCs and a base plate with through holes for tubular SOFCs, **characterized in that** it is manufactured in a manner according to any of the claims 1-5.
